# EUROPEAN PATENT APPLICATION

(11) **EP 2 128 114 A2**
(43) Date of publication of application: **02.12.2009**
(21) Application number: 09161082.4
(22) Date of filing: 26.05.2009
(51) Int. Cl.: C05F 5/00, C05F 11/00

(54) **Procedure for obtaining a fertilizing product from beer production waste**

(30) Priority: 28.05.2008 ES 200801594
(71) Applicant: Heineken España, S.A., 41007 Sevilla (ES)
(72) Inventor: De Prado Amian, Rafael, 41007 Sevilla (ES); Gonzalez Fernandez, Jose, Luis, 41007 Sevilla (ES); Jurado Bello, Manuel, Sevilla 41007 (ES); Diz Perez, Jose, 41007 Sevilla (ES)
(74) Representative: Carpintero Lopez, Francisco

(57) **Abstract**

The invention defines a procedure for obtaining a fertilizing product from beer production waste, **characterized in that** it comprises the stages:
(a) subjecting the waste to alkaline treatment at a pH of 10.5-13, followed by filtering to obtain a protein solution;
(b) subjecting the protein solution obtained in stage (a) to an acid treatment at a pH of 2.5-4.5, followed by filtering to obtain a protein concentrate; and
(c) subjecting the protein concentrate obtained in stage (b) to hydrolysis, to obtain a fertilizing product.
This procedure allows obtaining several fertilizing products that can be used in agricultural treatments, as well as using this industrial waste which otherwise could cause environmental problems, due to their high biological load.

## Description

### FIELD OF THE INVENTION

The invention relates to the field of agricultural application products. Specifically, the invention relates to a fertilizing product obtained from beer production waste.

### BACKGROUND OF THE INVENTION

As is well known in the prior art, a fertilizer is an organic or inorganic, natural or synthetic substance that is used to enrich soil and supply plants with one or more nutritional elements necessary for their normal vegetative growth.

In addition to being a complete source of nutrients for plants, organic fertilizers supply organic matter to the soil which, for sandy or clay soils with low activity, for example, can represent an improvement in their physical, chemical and biological properties due to its conditioning effect. These fertilizers can contain micronutrients and other beneficial microorganisms, such as bacteria and fungi.

Thus, for example, Kobayashi et al. studied the effect of a *Saccharomyces cerevisiae* yeast extract combined with an inorganic fertilizer on the growth of pea plants ("Effect of yeast extracts on higher plants", Plant and Soil (1980), 57(1), 41-7; "Effect of addition of the materials autolyzed from yeast cells on plant growth", Kankyo Sogo Kenkyusho Nenpo (1980), 7, 87-90).

Similarly, Kudryasheva et al. ("Amino acids and their utilization", Pishchevaya Promyshlennost (Moscow, Russian Federation) (1992), (4), 13-14) studied the use of aminoacids obtained from different yeast strains, particularly bread yeast *Saccharomyces cerevisiae*, in fertilizers, food additives, etc.

By the other hand, document HU 9902060 describes a fertilizing aqueous composition for leaves and roots from plants containing Saccharomyces cerevisiae, in addition to trace elements, complexing agents, buffer agents and other nutrients such as aminoacids, humic acids, enzymes, sugars, etc.

More recently, document CN 1966663 describes a microbial agent composed of *Saccharomyces cerevisiae, Lactobacillus plantarum, Mucor recemosus* and *Aspergillus oryzae* used as a leaf fertilizer to promote the growth of plants with roots and leaves, improve cultivated soil and increase the yield of crops.

Similarly, document CN 19191800 describes a nutrient for animals and plants obtained by diluting sludge of the yeast *Saccharomyces cerevisiae* in water until obtaining an emulsion, mixing this with papain, neutral proteinase and sodium chloride, then hydrolyzing the mixture, deactivating the enzymes and, finally, concentrating or drying the product obtained. The final product presents a large number of nutrients and a high absorption rate.

Furthermore, document CN 1911870 describes a nutrient for plants that comprises yeast *Saccharomyces cerevisiae* and the bacteria *Lactobacillus plantarum* and *Lactobacillus acidophilus,* as well as components such as derivatives of potato or coffee, sugar, glucose, peptone, magnesium sulfate, manganese sulfate, dipotassium hydrogen phosphate and sodium chloride. This nutrient improves microorganisms in the soil, promotes plant growth, increases the use rate of fertilizers and increases the resistance of plants to diseases and stress.

Recently, organic waste of other origins are being used that are also sources of nutrients for plants, such as vegetable waste from parks, gardens, etc., animal waste, agro-industrial waste and household solid waste.

Thus, document US 2003022357 describes a biological fertilizer made from cells of yeast of *Saccharomyces genus* and sludge from waste water storage or treatment plants, in the production of which the yeast cells are activated by applying an electromagnetic field.

Similarly, document US 2002187900 relates to a biological fertilizer comprising cells of yeast (genus *Saccharomyces*) activated electromagnetically, combined with purines of bovine cattle. Analogously, document US 2002187552 relates to a biological fertilizer comprising cells of yeast (genus *Saccharomyces*) activated electromagnetically combined with fowl purines.

The present inventors have now found that the waste obtained from the beer production process, adequately treated, produce a number of alternative fertilizing products, as well as allowing to use industrial waste that otherwise could cause environmental damage, given their high biological load.

This industrial waste obtained from beer production has hitherto been used basically as a nutritional complement in animal fodder.

Therefore, in the procedure of the invention the waste obtained from beer production are subjected to a process in several stages with alkaline treatment, acid treatment and subsequent hydrolysis to obtain an alternative fertilizing product. In addition, this allows obtaining valuable byproducts that can also be used in agricultural treatments.

### OBJECT OF THE INVENTION

The object of the present invention is therefore to provide a procedure for obtaining a fertilizing product from the waste produced in beer production.

A further object of the invention is to provide the fertilizing product obtained by said procedure.

### BRIEF DESCRIPTION OF THE DRAWINGS

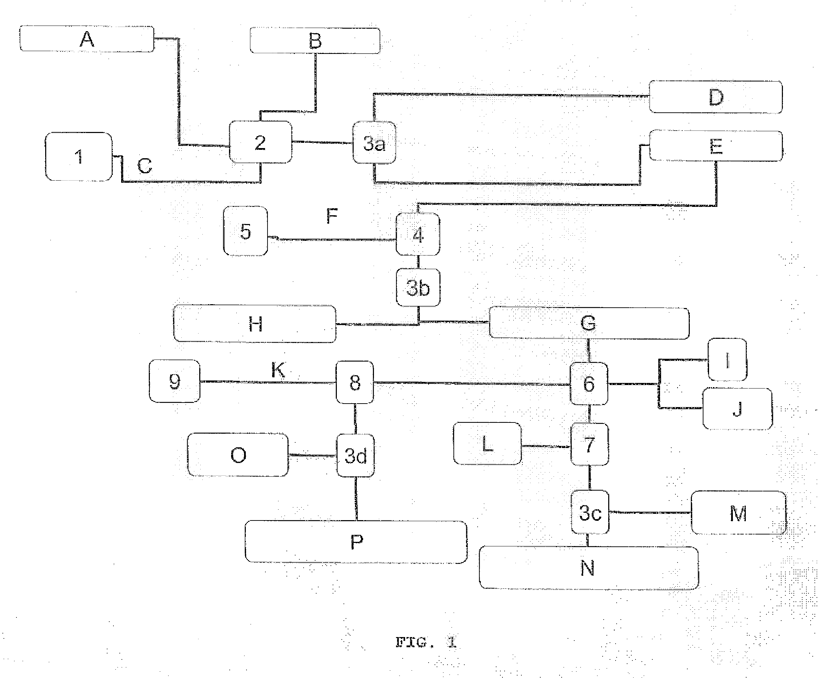

Figure 1 shows the block diagram of the procedure of the invention, wherein the beer production waste (A) is subjected to alkaline treatment in the extraction reactor (2), acid treatment in the acidification reactor (4) and hydrolysis in the enzymatic reactor (7) and/or the acid hydrolysis reactor (8) to obtain a number of solid or liquid products and byproducts with agricultural application.

### DETAILED DESCRIPTION OF THE INVENTION

The present invention provides a procedure for obtaining a fertilizing product from the beer production waste, hereinafter referred to as the "procedure of the invention", which comprises the following stages:
(a) subjecting the waste to alkaline treatment at a pH of 10.5-13, followed by filtering to obtain a protein solution;
(b) subjecting the protein solution obtained in stage (a) to an acid treatment at a pH of 2.5-4.5, followed by filtering to obtain a protein concentrate; and
(c) subjecting the protein concentrate obtained in stage (b) to hydrolysis, to obtain a fertilizing product.

In the context of the invention, the term "beer production waste" refers to the yeast produced in a secondary manner during the process of beer production, resulting from alcoholic fermentation or anaerobic degradation of the carbohydrates of barley by the blastomycete fungus *Saccharomyces cerevisiae*, which it performs to obtain the energy needed to survive, producing in this process ethanol and carbon dioxide. This waste present a composition similar to that of the initial yeast (yeast produced in a primary manner): a high protein content including all essential aminoacids, a high content in water soluble vitamins of complex B, phosphates, potassium, sulfur, magnesium and calcium, a low sodium content, a considerable amount of unsaturated fatty acids, lecithins and cephalins, and a high carbohydrate content, particularly glucogen, trealose, glucanes and mananes. They also contain other substances generated in the fermentation, such as ethyl alcohol, carbon dioxide and traces of chemical substances such as esters, aldehydes, ketones and higher alcohols.

In a first stage, the beer production waste, to which water is added depending on its water content, is treated with a basic compound with a pH of 10.5-13, thereby extracting the protein fraction of the yeast. This extraction is performed in the aforementioned pH range depending on the characteristics of the waste used, with heating to a temperature of 40-50ºC and stirring for a suitable time on the order of one hour, optionally in the presence of an antioxidant such as potassium metabisulfite, for example, to prevent oxidation and browning of the product.

In a particular embodiment of the procedure of the invention, the alkaline treatment of stage (a) is performed adding a basic compound selected from among potassium hydroxide, ammonium hydroxide, sodium hydroxide, sodium carbonate and calcium carbonate. In a preferred embodiment of the procedure of the invention, the alkaline treatment of stage (a) is performed adding potassium hydroxide. This basic compound will be used in a concentration on the order of 0.5-5 M (0.5-2 M in the case of potassium hydroxide, or 1-5 M in the case of ammonium hydroxide, for example) and will be added from a suitable storage tank. This alkaline treatment will be carried out in an appropriate reactor of the state of the art, such as a reactor of stainless steel or another corrosion-resistant material, provided with a rotary stirrer, a recirculation system, a heating system and a pH meter.

The suspension obtained in said alkaline treatment is then pumped to a separator to obtain two fractions: a solid fraction that can be used as a greenhouse cultivation substrate; and a liquid fraction or protein solution in which the proteins are dissolved. This separator can be a decanter (horizontal centrifuge), a vertical centrifuge or a filter, or a combination thereof, preferably a decanter, although two centrifugations must be performed.

Next, in a second stage, the protein solution is acidified to form a precipitate. In a particular embodiment of the procedure of the invention, the acid treatment of stage (b) is performed by adding an acid compound selected from among phosphoric acid and sulfuric acid. In a preferred embodiment, the acid treatment of stage (b) is performed adding phosphoric acid. This acid compound will be used in a concentration on the order of 0.5-1 M for phosphoric acid or 0.5-1.5 M for sulfuric acid, for example, and will be added from a suitable storage tank. The acid treatment will be carried out in an appropriate reactor of the state of the art, such as a reactor of stainless steel or another corrosion-resistant material, provided with a rotary stirrer, a recirculation system, a thermal insulation system, a heating system, an acid dispenser and a pH meter.

After the acid treatment, the solid fraction or protein concentrate and the liquid fraction or P-K solution are separated. This can be done with one of the aforementioned separator devices (decanter, vertical centrifuge or filter), although a vertical centrifuge or a decanter with polyelectrolyte addition are preferred. Data on the fractions obtained in the same manner for other byproducts of vegetable origin as described in previous works of some of the authors of this patent application (Ordoñez, C.; Tejada, M.; Benitez, C. and Gonzalez, J.L. (2001), "Obtaining a protein concentrate from integral defatted sunflower flour", Bioresource Technology, 78, 187-190; Ordoñez, C.; Tejada, M.; Benitez, C. and Gonzalez, J.L. (2006), "Characterization of a phosphorus-potassium solution obtained during a protein concentrate process from sunflower flour. Application on rye-grass", Bioresource Technology, 97, 522-528; Ordoñez, C.; Benitez, C. and Gonzalez, J.L. (2008) "Aminoacid production from a sunflower wholemeal protein", Bioresource Technology, 99: 4749-4754; and Orellana, M.B.; Aragonés, J.; Tejada M.; Benitez C. and Gonzalez, J.L. (2006), "The use of soya flour to obtain fertilizers", 6th International Chemistry Congress of ANQUE. Puerto de la Cruz (Tenerife, Spain), Proceedings of the Congress p. 355-356).

The P-K solution can be used as a nutritional solution in agricultural applications or as a starting point for manufacturing other fertilizing solutions, which could be made with the composition requested by the farmer (bespoke fertilizers) (Ordoñez et al. 2006, supra).

Water is added to the protein concentrate until reaching a protein concentration on the order of 5-10% by weight and then a basic compound is added, such as potassium hydroxide 0.1N, for example, to neutralize this suspension. The protein concentrate thus treated is then subjected to hydrolysis to obtain the aminoacids.

In a particular embodiment of the procedure of the invention, the hydrolysis of stage (c) is an enzymatic hydrolysis. In a preferred embodiment, this enzymatic hydrolysis is performed by adding an enzyme selected from among alkalase and flavourzyme. In a more preferred embodiment, the enzymatic hydrolysis is sequential and is performed by adding first the alkalase enzyme followed by the flavourzyme enzyme. This process shall be performed according to the procedure described in a previous work of the authors for other vegetable byproducts (Ordoñez et al. (2006), supra; and Orellana et al. (2006), supra), obtaining a hydrolysis degree of about 40%. This yield is lower than with acid hydrolysis but allows obtaining a solution with aminoacids used in ecological agriculture or allowing amendments to complete its content in other elements.

In another specific embodiment of the procedure of the invention, the hydrolysis of stage (c) is an acid hydrolysis. In a preferred embodiment, this acid hydrolysis is performed by adding an acid compound selected from among sulfuric cid and hydrochloric acid, preferably sulfuric acid. This acid compound will be used in a concentration of 3 M. Acid hydrolysis causes the full separation of the component aminoacids of the protein. This aminoacid solution can be used for non-ecological agricultural uses, and can be improved by adding other fertilizers.

These hydrolysis processes can be performed separately or in parallel. In the latter case, one part of the suspension of protein concentrate is sent to the enzymatic hydrolysis reactor (7) and the other part is sent to the acid hydrolysis reactor (8).

Both enzymatic hydrolysis and acid hydrolysis shall be performed in an appropriate reactor of the state of the art, such as a reactor of stainless steel or another corrosion-resistant material, provided with a rotary stirrer, a temperature control system, a reagent dispenser and a pH meter.

After the hydrolysis the solid fraction and liquid fraction or aminoacid solution shall be separated. As indicated above, in the case of enzymatic hydrolysis the aminoacid solution obtained can be used in ecological agriculture. In case of acid hydrolysis the aminoacid solution obtained cannot be used in ecological agriculture but may be used in conventional agriculture. The corresponding solid phases, particularly that obtained from enzymatic hydrolysis, which has a lower yield, can be recycled to the acid hydrolysis reactor (8) to use the remaining unhydrolyzed protein and thereby improve the yield of the process.

In another aspect of the invention the fertilizing product is supplied as obtained by the procedure described above. As indicated, an aminoacid solution is obtained for use in ecological agriculture and/or an aminoacid solution for use in conventional agriculture. In addition, valuable byproducts with agricultural application are obtained such as a greenhouse cultivation substrate and a P-K solution.

### DETAILED DESCRIPTION OF THE DRAWINGS

Figure 1 represents a block diagram of the procedure of the invention.

The beer production waste (A) and the water (B) are introduced in the extraction reactor (2). Next the basic compound (C) is added to said reactor from the storage tank (1) to proceed to the alkaline treatment. At the end of this treatment, the resulting suspension is pumped to a separator (3a) which separates a solid fraction (D) that can be used as a greenhouse cultivation substrate and a liquid fraction or protein solution (E) in which the proteins are dissolved.

Said protein solution (E) is introduced in the acidification reactor (4) and the acid compound (F) is added from the storage tank (5) to proceed to the acid treatment. At the end of this treatment, the resulting suspension is pumped to a separator (3b) which separates a solid fraction or protein concentrate (G) and a liquid fraction or P-K solution (H) that can be used as a nutritional solution in agricultural application or as a starting point for manufacturing other fertilizing solutions.

The protein concentrate (G) is then introduced in the reactor (6), where water (I) is added followed by potassium hydroxide (J) to neutralize the suspension obtained. This protein concentrate suspension is then sent to the enzymatic hydrolysis reactor (7), to which are added the enzyme or combination of enzymes (L), and/or to the acid hydrolysis reactor (8) to which the acid compound (K) is added from the storage tank (9).

At the end of the enzymatic hydrolysis in the reactor (7), the resulting suspension is pumped to a separator (3c) which separates the solid fraction (M) and the liquid fraction or aminoacid solution (N) used in ecological agriculture. Similarly, at the end of the acid hydrolysis process in the reactor (8), the resulting suspension is pumped to a separator (3d) which separates the solid fraction (O) and the liquid fraction or aminoacid solution (P), which is used in conventional agriculture.

The following example illustrates the invention and should not be understood as limiting its scope.

### EXAMPLE 1

### Preparation of a fertilizing product from beer production waste by the procedure of the invention.

The raw material used was a beer production waste containing 15% by weight of protein and the following composition of aminoacids, vitamins, minerals and trace elements:

**Table 1. Aminoacid content.**

| **Aminoacid** | **% weight of gross protein** |
|---|---|
| Glutamic acid | 13.4 |
| Asparagine | 9.8 |
| Lysine | 8.2 |
| Leucine | 7.7 |
| Alanine | 6.7 |
| Valine | 5.7 |
| Serine | 5.4 |
| Isoleucine | 5.4 |
| Arginine | 5.2 |
| Threonine | 5.1 |
| Phenylalanine | 4.5 |
| Proline | 3.9 |
| Tyrosine | 3.8 |
| Histidine | 2.5 |
| Methionine | 1.9 |
| Tryptophan | 1.3 |
| Cystine | 1.3 |
| Others | 8.2 |

**Table 2. Vitamin content**

| **Vitamin** | **mg/kg dry matter** |
|---|---|
| B1 | 300-500 mg |
| B2 | 40-60 mg |
| B5 | 80-160 mg |
| B6 | 20-30 mg |
| PP | 200-300 mg |
| Choline | 4000-5000 mg |

**Table 3. Mineral and trace element content**

| **Minerals** / **trace element** | **g/kg dry matter** |
|---|---|
| Potassium | 20.0-30.0 g |
| Sodium | 0.2-0.4 g |
| Magnesium | 1.0-2.0 g |
| Calcium | 1.0-2.0 g |
| Phosphorus | 11.0-16.0 g |
| Iron | 30 ppm |
| Silica | 30 ppm |
| Selenium | 0.1 ppm |

1000 g of this waste were treated in a stainless steel extraction reactor with KOH 1M and sodium metabisulfite 0.25% (w/v) at a pH of 12. with stirring (speed 40-60Hz) and heating at a temperature of 40ºC for 1 hour.

After the alkaline treatment the fractions were separated in a decanter performing two centrifugations.

The protein solution thus obtained was treated with H₃PO₄ 0.5M in a stainless steel acidification reactor at a pH of 4 with stirring (speed 15 Hz) and heating at a temperature of 50ºC for 1-3 hours.

After the acid treatment the fractions were separated in a vertical centrifuge.

The solid fraction was first washed with water and then water was added until obtaining a protein concentrate concentration of 10% by weight with KOH 0.1M to a pH=7.

One part of the protein concentrate thus treated (1 liter) was subjected to enzymatic hydrolysis with 0.02 g of alkalase and 0.025 g flavourzyme per gram of protein concentrate in a stainless steel enzymatic rector, with stirring, at a temperature of 50-55ºC for 4-6 hours at pH=7. 1 liter of fertilizing product was thus obtained consisting in a solution of aminoacids with 6.5% by weight of free aminoacids.

One part of the protein concentrate thus treated (0.5 kg) was subjected to acid hydrolysis with H₂SO₄ 3M in a stainless steel acid hydrolysis reactor with stirring, at a temperature of 40ºC for 1-2 hours at pH<2. 1 liter of fertilizing product was thus obtained consisting in a solution of aminoacids with 8% by weight of free aminoacids.

## Claims

1. Procedure for obtaining a fertilizing product from beer production waste **characterized in that** it comprises the following stages:
(a) subjecting the waste to alkaline treatment at a pH of 10.5-13, followed by filtering to obtain a protein solution;
(b) subjecting the protein solution obtained in stage (a) to an acid treatment at a pH of 2.5-4.5, followed by filtering to obtain a protein concentrate; and
(c) subjecting the protein concentrate obtained in stage (b) to hydrolysis, to obtain a fertilizing product.

2. Procedure according to claim 1, **characterized in that** the alkaline treatment of stage (a) is performed by adding a basic compound selected from among potassium hydroxide, ammonium hydroxide, sodium hydroxide, sodium carbonate and calcium carbonate.

3. Procedure according to claim 2, **characterized in that** the alkaline treatment of stage (a) is performed by adding potassium hydroxide.

4. Procedure according to claim 1, **characterized in that** the acid treatment of stage (b) is performed by adding an acid compound selected from among phosphoric acid and sulfuric acid.

5. Procedure according to claim 4, **characterized in that** the acid treatment of stage (b) is performed by adding phosphoric acid.

6. Procedure according to claim 1, **characterized in that** the hydrolysis of stage (c) is an enzymatic hydrolysis.

7. Procedure according to claim 6, **characterized in that** the enzymatic hydrolysis is performed by adding an enzyme selected from among alkalase and flavourzyme.

8. Procedure according to claim 1, **characterized in that** the hydrolysis of stage (c) is an acid hydrolysis.

9. Procedure according to claim 8, **characterized in that** the acid hydrolysis is performed by adding an acid compound selected from among sulfuric acid and hydrochloric acid.

10. Fertilizing product obtainable by the procedure of claims 1-9.
